# EUROPEAN PATENT SPECIFICATION

(11) **EP 0 557 552 B1**
(45) Date of publication and mention of the grant of the patent: **16.04.1997**
(21) Application number: 92103289.2
(22) Date of filing: 26.02.1992
(51) Int. Cl.: G11B 5/008

(54) **Method and apparatus for erasing information from a magnetic tape**
Verfahren und Gerät zum Löschen der Information von einem Magnetband
Procédé et appareil d'effacement d'information d'une bande magnétique

(43) Date of publication of application: 01.09.1993
(73) Proprietor: TANDBERG DATA A/S, 0808 Oslo 8 (NO)
(72) Inventor: Pahr, Per Olaf, N-3400 Lier (NO); Rubas, Ladislav, N-3408 Tranby (NO)
(74) Representative: Goddar, Heinz J., Dr.

(56) References cited:
- EP-A- 0 069 548
- EP-A- 0 379 324
- US-A- 4 121 264
- US-A- 4 131 926
- IEEE TRANSACTIONS ON MAGNETICS. vol. 26, no. 6, November 1990, NEW YORK US pages 3004 - 3009, XP000175081 H. EDELMAN ET AL. 'A NEW HIGH DENSITY MAGNETORESISTIVE TAPE HEAD'
- PATENT ABSTRACTS OF JAPAN vol. 9, no. 259 (P-397)(1982) 17 October 1985; & JP-A-60 109 005

## Description

The invention relates to a method for erasing information from a magnetic tape, said tape being divided into at least two physical partitions, each physical partition including a plurality of data tracks carrying recorded data or the like and at least one set of servo tracks carrying position information and dedicated to an area between the data tracks. The invention further relates to an apparatus adapted to perform such a method.

The invention is applicable to tape drives compatible with the so-called QIC standard tape formats, i.e. drives using a 1/4 inch (6.27 mm) magnetic tape width. QIC therein means the abbreviation for quarter inch cartridge drive standards and is nowadays in particular related to the 10 GByte 5 1/4 inch form factor tape drive and the 3 GByte 3 1/2 inch form factor tape drive.

The specifications for the 10 GByte standard and for the 3 GByte standard are collected in various documents, for instance in QIC-91-41 (QIC-1CF), October 8, 1991, Revision B: "Common Recording Format Specification" and QIC-91-42 (QIC-10GB), October 10, 1991, Revision B: "Serial Recorded Magnetic Tape Cartridge for Information Interchange", both for the 10 GByte standard, and QIC-3000, Revision A, September 24, 1991: "Proposed Interchange Standard Serial Recorded Magnetic Tape Cartridge for Information Interchange" for the 3 GByte standard.

As shown in all these documents, the tape formats use dedicated servo tracks pre-recorded on the tape by the tape manufacturer. The principle of dedicated servo tracks had previously been disclosed in US-A 5,008,765. The servo track carries position information on how to move a multiple channel head to one of a plurality of predetermined positions once the head has been moved approximate that predetermined position. The use of such servo tracks has turned out to be very effective in avoiding read/write errors.

When tape cartridges are worn out and shall be discarded, or if they are going to be re-used, the information stored thereon usually must be erased. In particular, if worn out tapes are to be recycled, the information must be deleted with a cheap and efficient method using preferentially an erase head. Current 1/4 inch tape drive formats in use implement the erase function with a full-width erase head, so that the servo tracks would be destroyed during the erasing procedure. This may be acceptable if the tapes or tape cartridges, respectively, are to be discarded, however, the prodcedure makes the tapes worthless if it should be re-used for other purposes. This situation very often arises when a large number of cartridges have been stored for archival purposes and shall thereafter be re-used at other offices or departments.

Accordingly, there is a need for a method for erasing information from a magnetic tape without destroying position information on the servo track. Relying on overwriting only, as the QIC specifications state, may cause troubles not only if the tapes contain confidential data or proprietary information which must be kept within the company, but also for future applications if the linear recording density will be considerably increased, for instance to 35 GByte. Nonwithstanding, a proposal for an erasing function is not contained in US-A 5,008,765.

The 10 or 3 GByte drives must also both write and read formerly used tape formats, so that efficient data interchange can take place between various models of the QIC drives with the same form factor. Thus, to ensure full backward functionality of the tape drives, the erase function is a must for these tape formats. Further, the customers are used to this function, since the "erase tape command" is available via the tape drive software run on most host computers. It is therefore desirable that the same erase function is implemented on the 3 or 10 GByte products. Also a forward compatibility can be best ensured if the convential erase function is used for the 10 GByte tapes. This is in particular the case if doubling the cartridge capacity is performed by doubling the number of tracks, possibly with increased linear density, by using the same tapes having probably the same magnetic media formulation and using, if possible, the same number of servo tracks as before.

The document US-A 4,121,264 which has been used to formulate the preamble parts of the independent claims discloses a method for recording information signals and control signals in parallel tracks on a magnetic recording medium. This tape has recorded thereon a first main track containing an information signal. This track is recorded in what may be called the forward direction. The tape also includes another main track substantially identical with the first one, but recorded with the tape moving in the reverse direction. A much narrower secondary control track is arranged alongside the first of said main tracks and recorded simultaneously therewith. The distance between the first main track and the associated secondary control track is selected such that a second secondary control track can be provided therebetween which is associated with the second main information track and is again simultaneously recorded therewith. A special embodiment shows each main track being subdivided into subtracks having a guard band between them. An erase head is provided capable to erase both the main information tracks and the corresponding control subtrack by defining an air gap having an overall length equal to the sum of the widths of the control subtrack recorded in the opposite direction and its two guard bands. The erase head is further designed to erase simultaneously the secondary control track that corresponds to both subtracks. The respective pole pieces are spaced from one another, so that the secondary control track lying between the subtracks and the first secondary control track is not covered by the erasing field of the erase head.

It is the object of the present invention to provide a method and apparatus for erasing information from a magnetic tape having the specifications of the preamble part of claim 1 or 3 which can be used with the QIC standard tape drive formats.

This object is solved by a method according to claim 1 and by an apparatus according to claim 3. Preferred embodiments are subject matter of the respective subclaims.

According to the invention, at least a first one of said physical partitions is erased during the movement of the tape in a forward direction defined by moving the tape towards the End of Tape and at least a second one of said physical partitions is erased during the movement of the tape either in a backward direction defined by moving the tape towards the Beginning of Tape or in a forward direction from the Beginning of Tape to the End of Tape. At least the servo tracks are excluded from being erased. So the positioning information is kept on the tape, and it can be re-used after previously recorded information being deleted from the tape. The method according to the invention has the advantage that the total lapse of time will be the same as with the conventionally used erase methods, since the tape must always be rewound to Beginning of Tape after one conventional erase command. The method is also applicable when a recording shall take place on an already used tape cartridge. The recording then starts on a first track set at Beginning of Tape having the Erase option "on", and the lower part of the tape is filled up with data. When recording starts on the first track set on the upper part of the tape, the Erase option is turned "on", and the erase procedure will be performed during movement from the Beginning of Tape to the End of Tape. Thus the method complies with the requirements of the QIC-150, QIC-525 etc. standards.

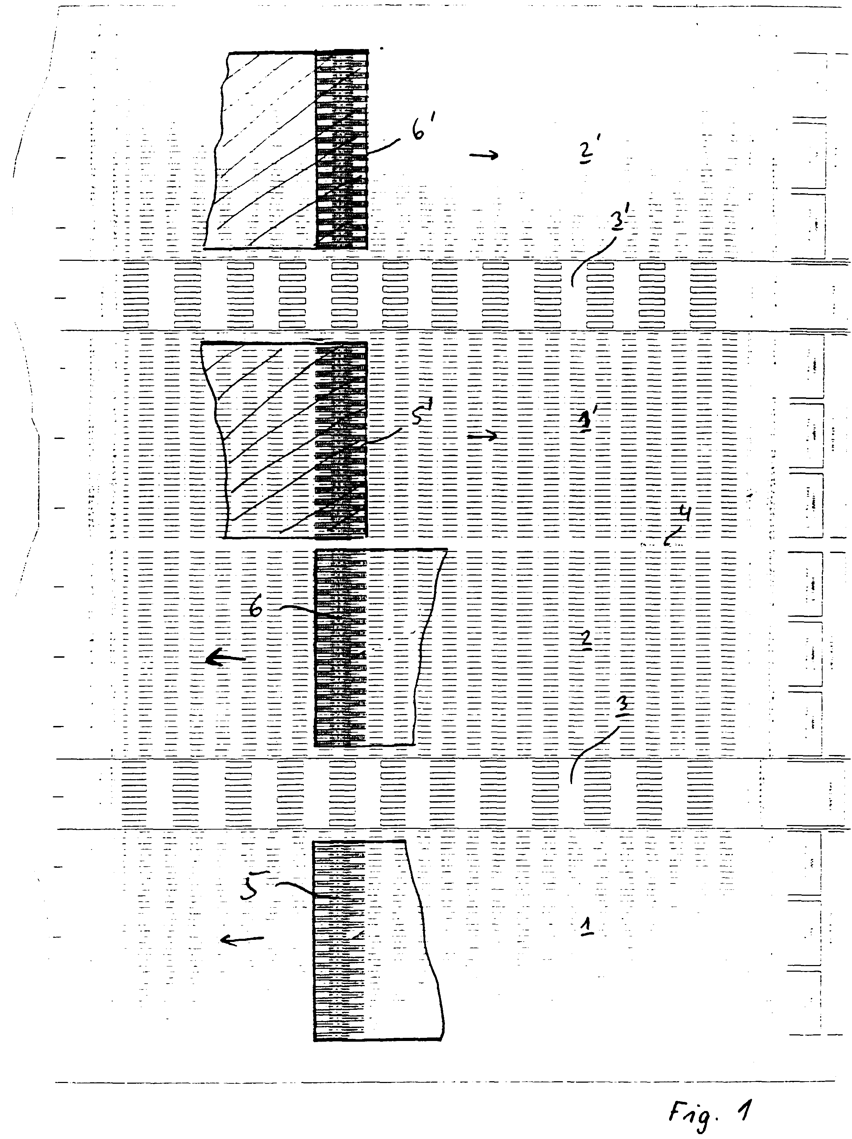

It is preferred that at least one of the data tracks immediately adjacent to the servo tracks is excluded from being fully erased. This solves a problem which is related to the fact that there are no guard bands between the physical data track and the servo track. Further explanations will be given below in connection with Figure 1.

An apparatus appropriate for performing the method according to the invention comprises means for moving a tape relative to an erase head in a forward direction and in a backward direction and is characterized in that means are provided to prevent the servo tracks from being erased.

Preferentially the erase gap width is selected such that at least one of the data tracks immediately adjacent to the servo tracks is excluded from being fully erased.

The invention will now be described in more detail with relation to the accompanying drawing, wherein
- Figure 1: shows a short part of a magnetic tape giving an example for the location of physical partitions comprising data tracks, to be erased by the method according to the invention, and of servo tracks.

In Figure 1, a first physical partition 1, 2 consists in a first section 1 of 36 physical data tracks numbered from 000 to 035 and in a second section 2 of also 36 physical data tracks numbered from 048 to 083. Twelve servo tracks numbered from S00 to S11 are provided in mid-section 3 between the two sections 1, 2. No guard band is provided between said first section 1 and the mid-section 3 or said second section 2 and the mid-section 3, respectively.

A similar arrangement of physical partition 1', 2' with sections 1'and 2', seperated by a mid-section 3' including also twelve servo tracks is provided in parallel to the above described first arrangement, seperated therefrom by a center guard band 4.

With a tape designed in the described manner the erasing function according to the invention can be performed in the following manner:

An erase head is designed such that physical partition 1, 2 is erased when the tape is moving in forward direction and then physical partition 1', 2' is erased when the tape is moving in backward direction. However, during normal writing the erasure of partition 1', 2' will take place in the forward direction.

Of course, the reverse action with respect to the partitions may occur, so that partition 1', 2' may be erased during the forward movement and physical partition 1, 2 may be erased during the backward movement.

If physical tracks 000 to 035 have to be erased simultaneously with the physical tracks 048 to 083, the servo tracks S00 and S11 will be damaged due to unavoidable tolerance build-ups on the one hand and magnetic fringe fields from the erase head on the other hand. Therefore, it might be appropriate to skip the data tracks close to the servo tracks, so that the erase head can sweep over and erase the remaining active data tracks while the servo tracks are not influenced by mechanical tolerances or magnetic fringe field tolerances. The erase head may be designed in such a manner that its non-erasing mid-sections nominally extends from the centre of physical track 034 to the centre of physical track 049. Then the physical tracks 033 and 050 will be erased, so that information can be recorded and stored on these and the respective outer physical tracks.

When alining the erase head with the read/write heads, a ± 1/2 track pitch is used for mechanical tolerances and a ± 1 track pitch for magnetic fringe field tolerances.

It follows from the geometry of the arrangement described in US-A 5,008,765 that there always will be data tracks or potential data tracks close to the servo tracks. The data tracks closest to the servo tracks should not be recorded when using the erase head, but they are actually available for use if the erase function for some reasons is not used.

Skipping data tracks will reduce the number of the remaining active data tracks and therefore the capacity of the magnetic tape. If 4 tracks are skipped in a tape according to the example of Figure 1, a capacity will be reduced from 10.0 GByte to 9.7 GByte, nominally, and to 9.5 GByte, nominally, if 8 tracks are removed.

The latter example is used for demonstrating the effect of the erasing sections 5,6 and 5', 6', respectively. When the above mentioned tolerances are taken into account using an erase head sweeping over the erase sections 5, 6, 5', 6', illustrated in Figure 1, will not influence the servo track sections 3, 3'.

To maintain the desired capacity, the number of tracks on the tape may be increased.

The features disclosed in the foregoing description, in the claims, and/or in the accompanying drawings may, both separately and in any combination thereof, be material for realising the invention in diverse forms thereof.

## Claims

1. A method of erasing information from a magnetic tape, said tape being divided into at least two physical partitions (1, 2; 1', 2'), each physical partition including a plurality of data tracks carrying recorded data or the like and at least one set of servo tracks (3, 3') carrying position information and dedicated to an area between the data tracks, wherein at least a first one of said physical partitions is erased during the movement of the tape in a forward direction defined by moving the tape towards the End of Tape, and at least a second one of said physical partitions is erased during the movement of the tape either in backward direction defined by moving the tape towards the Beginning of Tape or in the forward direction from the Beginning of Tape to the End of Tape, characterized in that at least the servo tracks are excluded from being erased.

2. The method as claimed in claim 1, characterized in that at least one of the data tracks immediately adjacent to the servo tracks is excluded from being fully erased.

3. An apparatus for erasing information from a magnetic tape, said tape being divided into at least two physical partitions (1, 2; 1,', 2'), each physical partition including a plurality of data tracks carrying recorded data or the like and at least one set of servo tracks (3, 3') carrying position information and dedicated to an area between the data tracks, wherein means for moving a tape relative to an erase head in a forward direction and in a backward direction is provided and the erase gap width of said erase head is at most the width of one of said physical partitions, characterized that means are provided to prevent the servo tracks from being erased.

4. The apparatus as claimed in claim 3, characterized in that said erase gap width is selected such that at least one of the data tracks immediately adjacent to the servo tracks is excluded from being fully erased.

## Patentansprüche

1. Verfahren zum Löschen von Information von einem Magnetband, wobei das Band in wenigstens zwei physikalische Partitionen (1, 2; 1', 2'), wobei jede physikalische Partition eine Vielzahl von Datenspuren, die aufgezeichnete Daten oder dergleichen tragen, und wenigstens einen Satz von Servospuren (3, 3'), die Positionsinformation tragen und einem Gebiet zwischen den Datenspuren speziell zugewiesen sind, aufgeteilt ist, wobei wenigstens eine erste der physikalischen Partitionen während der Bewegung des Bandes in einer Vorwärtsrichtung, die durch Bewegen des Bandes in Richtung auf das Ende des Bandes definiert ist, gelöscht wird, und wenigstens eine zweite der physikalischen Partitionen während der Bewegung des Bandes entweder in Rückwärtsrichtung, die durch die Bewegung des Bandes in Richtung auf den Beginn des Bandes definiert ist, oder in Vorwärtsrichtung vom Beginn des Bandes zum Ende des Bandes gelöscht wird, dadurch gekennzeichnet, daß wenigstens die Servospuren vom Gelöschtwerden ausgeschlossen sind.

2. Verfahren nach Anspruch 1, dadurch gekennzeichnet, daß wenigstens eine der Datenspuren unmittelbar benachbart den Servospuren davon ausgeschlossen ist, voll gelöscht zu werden.

3. Vorrichtung zum Löschen von Information von einem Magnetband, wobei das Band in wenigstens zwei physikalische Partitionen (1, 2; 1', 2'), wobei jede physikalische Partition eine Vielzahl von Datenspuren enthält, die aufgezeichnete Daten oder dergleichen tragen, und wenigstens einen Satz von Servospuren (3, 3'), die Positionsinformation tragen und einem Gebiet zwischen den Datenspuren speziell zugewiesen sind, aufgeteilt ist, wobei eine Einrichtung zum Bewegen eines Bandes relativ zu einem Löschkopf in einer Vorwärtsrichtung und in einer Rückwärtsrichtung vorgesehen ist und die Breite des Löschspaltes des Löschkopfes höchstens die Breite einer der physikalischen Partitionen beträgt, dadurch gekennzeichnet, daß Mittel vorgesehen sind, um zu verhindern, daß die Servospuren gelöscht werden.

4. Vorrichtung nach Anspruch 3, dadurch gekennzeichnet, daß die Breite des Löschspaltes so gewählt ist, daß wenigstens eine der Datenspuren unmittelbar benachbart den Servospuren davon ausgeschlossen ist, voll gelöscht zu werden.

## Revendications

1. Procédé d'effacement d'informations d'une bande magnétique, ladite bande étant divisée en au moins deux parties physiques séparées (1, 2 ; 1', 2'), chaque partie physique séparée comportant plusieurs pistes de données supportant des données enregistrées ou analogues et au moins un jeu de pistes d'asservissement (3, 3') supportant des informations de position et affectées à une zone située entre les pistes de données, dans lequel au moins une première desdites parties physiques séparées est effacée pendant le déplacement de la bande dans une direction vers l'avant définie par le déplacement de la bande vers la fin de la bande, et au moins une seconde partie desdites parties physiques séparées est effacée pendant le mouvement de la bande dans la direction vers l'arrière définie par le déplacement de la bande vers le début de la bande ou dans la direction vers l'avant à partir du début de la bande vers la fin de la bande, caractérisé en ce qu'au moins les pistes d'asservissement ne sont pas effacées.

2. Procédé selon la revendication 1, caractérisé en ce qu'au moins une des pistes de données immédiatement adjacente aux pistes d'asservissement n'est pas complètement effacée.

3. Dispositif d'effacement d'informations d'une bande magnétique, ladite bande étant divisée en au moins deux parties physiques séparées (1, 2 ; 1', 2'), chaque partie physique séparée comportant plusieurs pistes de données supportant des données enregistrées ou analogues et au moins un jeu de pistes d'asservissement (3, 3') supportant des informations de position et affectées à une zone située entre les pistes de données, dans lequel sont agencés des moyens pour déplacer une bande par rapport à une tête d'effacement dans une direction vers l'avant et une direction vers l'arrière et la largeur de l'espace d'effacement de ladite tête d'effacement est au maximum la largeur d'une desdites parties physiques séparées, caractérisé en ce que des moyens sont fournis pour empêcher d'effacer les pistes d'asservissement.

4. Dispositif selon la revendication 3, caractérisé en ce que ladite largeur d'espace d'effacement est sélectionnée de telle sorte qu'au moins une desdites pistes de données immédiatement adjacente aux pistes d'asservissement n'est pas complètement effacée.
